# EUROPÄISCHE PATENTANMELDUNG

(11) **EP 2 075 047 A2**
(43) Veröffentlichungstag der Anmeldung: **01.07.2009**
(21) Anmeldenummer: 08105922.2
(22) Anmeldetag: 03.12.2008
(51) Int. Cl.: B01D 46/00, B01D 46/24, F01N 3/022

(54) **Filterelement und Abgasnachbehandlung einer Brennkraftmaschine sowie Verfahren zur Herstellung eines erfindungsgemäßen Filterelements**

(30) Priorität: 27.12.2007 DE 102007062703
(71) Anmelder: Robert Bosch GmbH, 70442 Stuttgart (DE)
(72) Erfinder: Jockel, Joerg, 370 04, Ceske Budejovice (CZ); Kruse, Matthias, 70569, Stuttgart-Vaihingen (DE); Hauber, Thomas, 73776, Altbach (DE); Koch-Groeber, Hermann, 70469, Stuttgart (DE); Saffe, Christoph, 71263, Weil Der Stadt (DE)

(57) **Zusammenfassung**

Es wird ein Filterelement 18 bestehend aus einem extrudierten Formkörper vorgeschlagen, der in unterschiedliche Segmente 40, 42 unterteilt ist. Die Materialeigenschaften des Filterelements 18 unterscheiden sich in den Segmenten 40 und 42.

## Beschreibung

### Stand der Technik

Die Erfindung betrifft ein Filterelement zur Reinigung der Abgase einer Brennkraftmaschine nach dem Oberbegriff des Anspruchs 1 sowie eine Abgasnachbehandlungseinrichtung mit einem erfindungsgemäßen Filterelement nach dem nebengeordneten Anspruch 7.

Derartige Filterelemente werden als Rußfilter für Diesel-Brennkraftmaschinen in den Abgasstrang einer Brennkraftmaschine eingesetzt.

Filterelemente sind in der Regel prismatische Körper mit einer Vielzahl von parallel zueinander verlaufenden Kanälen, die durch Extrusion eines keramischen Werkstoffs, wie zum Beispiel Cordierit hergestellt werden. Eine erste Gruppe, die so genannten Eintrittskanäle, sind an der Austrittsfläche des Filterelements verschlossen, während die zweite Gruppe von Kanälen, die so genannten Austrittskanäle, an der Eintrittsfläche des Filterelements verschlossen sind. Gleichzeitig bestehen die Wände des Filterelements aus einem porösen Werkstoff, so dass das zu reinigende Abgas durch die Filterwände hindurch von den Eintrittskanälen in die Austrittskanäle gelangt. Dabei werden feste Partikel wie Ruß an und in den Filterwänden abgeschieden.

Wenn nun in regelmäßigen Abständen die abgelagerten Rußpartikel oxidiert werden und dadurch das Filterelement regeneriert wird, stellen sich aufgrund der ungleichen Rußbeladung und der ungleichen Wärmeabfuhr Temperaturunterschiede in radialer und in axialer Richtung sowie in Umfangsrichtung des Filterelements ein. Insbesondere ergeben sich im Inneren des Filterelements höhere Temperaturen als in den radial außen liegenden Bereichen. Die genannten Unregelmäßigkeiten werden durch die in aller Regel asymmetrischen Geometrien der Abgasanlage noch vergrößert.

In Folge der unvermeidlichen Unterbrechungen des Betriebs der Brennkraftmaschine kommt es zu ungleichmäßigen Rußbeladungen des Filterelements in allen drei Dimensionen.

Aufgrund der Temperaturgradienten innerhalb des Filterelements bei der Regenerierung kommt es zu inneren Spannungen. Wenn diese inneren Spannungen die Bruchgrenze des Filterelements überschreiten, dann treten an dem Filterelement Risse auf und es wird dadurch unbrauchbar.

Aus der DE 601 12 463 T2 ist ein Filterelement bekannt, dessen Filterwänden an der Eintrittsfläche eine geringere Wandstärke aufweisen als an der Austrittsfläche. Dadurch soll einerseits das Einleiten einer Regenerierung erleichtert und andererseits die Wärmekapazität im Bereich der Austrittsfläche so weit erhöht werden, dass dort bei der Regenerierung des Filterelements keine unzulässig hohen Temperaturen auftreten.

### Offenbarung der Erfindung

Der Erfindung liegt die Aufgabe zugrunde, ein extrudiertes Filterelement bereitzustellen, das verbesserte Betriebseigenschaften, insbesondere eine gleichmäßigere Beladung des Filterelements, aufweist. Außerdem soll das erfindungsgemäße Filterelement unempfindlicher bei der Regenerierung gegenüber den auftretenden Temperaturen und Temperaturgradienten sein.

Diese Aufgabe wird erfindungsgemäß bei einem Filterelement mit einer parallel zur Hauptströmungsrichtung der Abgase verlaufenden Längsachse, mit einer Vielzahl von Eintrittskanälen und Austrittskanälen, wobei die Kanäle durch Filterwände begrenzt werden, und wobei das Filterelement durch Extrudieren aus einer Suspension hergestellt wird, dadurch gelöst, dass Materialzusammensetzung und/oder Struktur, insbesondere die Porosität und die Oberflächeneigenschaften, der Filterwände in radialer Richtung und/oder in Umfangsrichtung Unterschiede aufweisen.

Durch die lokal unterschiedliche Materialzusammensetzung und/oder Struktur der Filterwände kann eine Vergleichmäßigung der Rußbeladung des Filterelements erreicht werden. Infolgedessen werden die Temperaturspitzen im Inneren des Filterelements bei der Regenerierung reduziert. Als unmittelbare Folge der reduzierten Temperaturspitzen sinken auch die inneren Spannungen im Filterelement bei der Regenerierung, sodass die Belastungen des Filterelements bei der Regenerierung deutlich verringert werden.

Des Weiteren ist es möglich, beispielsweise durch lokal angepasste Materialzusammensetzungen im Inneren des Filterelements die spezifische Wärmekapazität der Filterwände zu erhöhen und dadurch ebenfalls die Temperaturspitzen bei der Regenerierung zu verringern.

Auch ist es möglich, über die gezielte Einstellung der Porosität die Rußbeladung lokal zu steuern und über die Einstellung der Oberflächeneigenschaften beispielsweise die Aufnahmefähigkeit der Filterwände für katalytische Beschichtungen, die nach dem Herstellen des Filterelements aufgebracht werden, selektiv bzw. lokal zu steuern. Dadurch ergibt sich eine Vielzahl von Parametern, die es erlauben, die Rußbeladung während des normalen Betriebs zu vergleichmäßigen und/oder die bei der Regenerierung des Filterelements auftretenden Temperaturen und die darauf resultierenden inneren Spannungen zu reduzieren.

Da das erfindungsgemäße Filterelement durch Extrusion insbesondere durch Ko-Extrusion hergestellt wird, sind die Material- und Herstellungskosten des erfindungsgemäßen Filterelements vergleichbar den herkömmlichen Filterelementen.

Eine vorteilhafte Ausgestaltung der Erfindung sieht vor, dass das Filterelement radial und/oder in Umfangsrichtung in verschiedene Segmente unterteilt ist, und dass sich die Materialzusammensetzung und/oder Struktur der Filterwände benachbart angeordneter Segmente voneinander unterscheidet.

Dadurch ist es möglich, mit einer Unterteilung des Filterelements in mehrere Segmente den unterschiedlichen Betriebsbedingungen des Filterelements durch eine geeignete Materialzusammensetzung oder Struktur der Filterwände Rechnung zu tragen.

Dabei ist es möglich, dass zwischen den Segmenten bzw. den Materialeigenschaften und der Struktur der Filterelemente zweier benachbarter Segmente ein fließender Übergang, ein gestufter Übergang oder ein abrupter Übergang vorgesehen ist. Welcher dieser Varianten im Einzelfall der Vorzug gegeben wird, hängt von den Umständen des Einzelfalls ab und den Fertigungsmöglichkeiten bei der Co-Extrusion.

Eine besonders vorteilhafte Ausgestaltung der Erfindung sieht vor, dass sich Materialzusammensetzung und/oder Struktur in Knotenpunkten des Filterelements Unterschiede zu den anschließenden Filterwänden aufweisen. Dadurch können die inneren Spannungen bei der Regenerierung ebenfalls abgebaut werden.

Die eingangs genannte Aufgabe wird erfindungsgemäß auch durch eine Abgasnachbehandlungseinrichtung mit einem Filterelement, wobei das Filterelement ein Filterelement nach einem der vorhergehenden Ansprüche ist, gelöst.

Die eingangs genannte Aufgabe wird ebenfalls durch ein Verfahren zur Extrusion des Filterelements aus einem keramischen Werkstoff dadurch gelöst, dass das Filterelement durch Co-Extrusion hergestellt wird. Für jedes Segment des erfindungsgemäßen Filterelements wird dem Extrusionswerkzeug eine unterschiedliche Materialzusammensetzung zugeführt. Dadurch können die gewünschten Eigenschaften der Segmente eingestellt werden. Beispielsweise ist es möglich, die unterschiedliche Porosität der Filterelemente durch unterschiedliche Zugabe von Porenbildnern zu der Suspension bzw. Extrusionsmasse einzustellen. In ähnlicher Weise können durch geeignete Zuschlagsstoffe die spezifische Wärmekapazität und/oder die Temperaturbeständigkeit des extrudierten Segments eingestellt werden. Entsprechendes gilt für die Oberfläche der extrudierten Filterelemente.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen genannten Vorteile können sowohl Einzeln als auch in beliebiger Kombination miteinander erfindungswesentlich sein.

### Kurze Beschreibung der Zeichnungen

Es zeigen:
- Figur 1: eine schematische Darstellung einer Brennkraftmaschine mit einer erfindungsgemäßen Abgasnachbehandlungseinrichtung,
- Figur 2: ein Ausführungsbeispiel eines erfindungsgemäßen Filterelements im Längsschnitt und
- Figur 3 und 4: Ausführungsbeispiele erfindungsgemäßer Filterelemente im Querschnitt

### Ausführungsformen der Erfindung

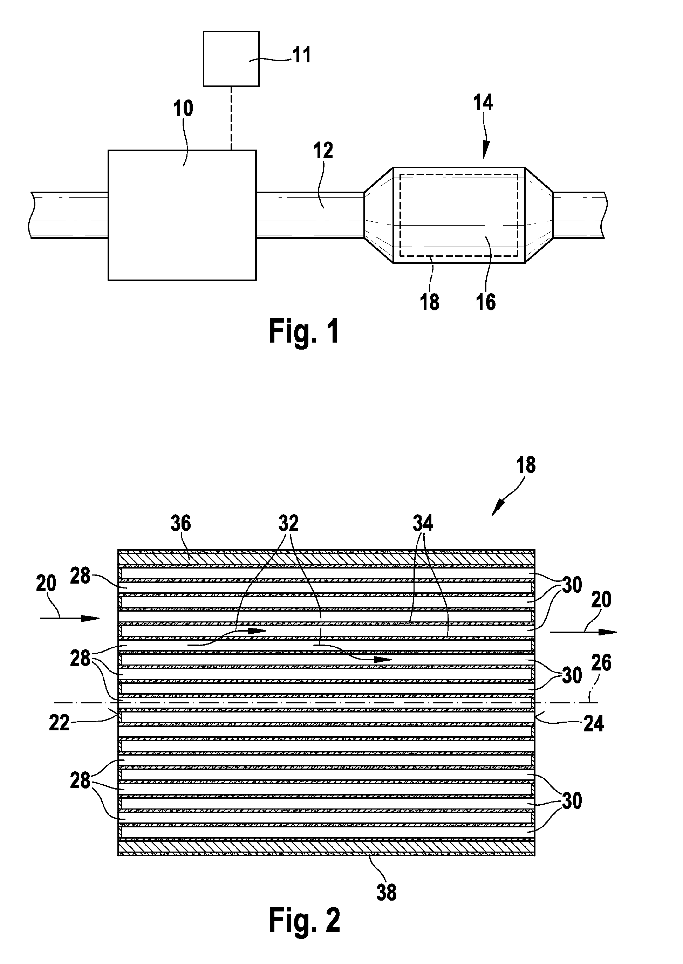

In Figur 1 tragen eine Brennkraftmaschine das Bezugszeichen 10 und ein zugehöriges Steuergerät das Bezugszeichen 11. Die Abgase werden über ein Abgasrohr 12 abgeleitet, in dem eine Filtereinrichtung 14 angeordnet ist. Mit dieser werden Rußpartikel aus dem im Abgasrohr 12 strömenden Abgas herausgefiltert, um gesetzliche Bestimmungen einzuhalten. Gleichzeitig erfolgt eine Umwandlung der in den Abgasen enthaltenen Schadstoffe, erforderlichenfalls auch mit Hilfe katalytisch wirksamer Beschichtungen.

Bei dem in Figur 1 dargestellten Ausführungsbeispiel umfasst die Filtereinrichtung 14 ein zylindrisches Gehäuse 16, in dem ein im vorliegenden Ausführungsbeispiel rotationssymmetrisches, insgesamt ebenfalls zylindrisches Filtere- und Filterelement 18. Im Folgenden wird der Begriff "Filterelement" verwandt, unabhängig davon , ob zusätzlich auch noch eine Filterung der Abgase erfolgt. Selbstverständlich ist die Erfindung nicht auf die in Figur 1 dargestellte Geometrie beschränkt.

Selbstverständlich können erfindungsgemäße Filterelemente 18 in Kraftfahrzeugen, Nutzfahrzeugen oder anderen mobilen oder stationären Anwendungen von Brennkraftmaschinen eingesetzt werden oder in Abgasanlagen von thermisch regenerierbaren Aerosol-Emissionen, wie zum Beispiel Feuerungen..

In Figur 2 ist ein Querschnitt durch ein erstes Ausführungsbeispiel eines erfindungsgemäßen Filterelements 18. Das Filterelement 18 ist als extrudierter Formkörper aus einem keramischen Material, wie zum Beispiel Cordierit, hergestellt. Das Filterelement 18 wird in Richtung der Pfeile 20 von nicht dargestelltem Abgas durchströmt. Eine erste Stirnfläche hat in Figur 2 das Bezugszeichen 22, während eine zweite Stirnfläche in Figur 2 das Bezugszeichen 24 hat.

Parallel zu einer Längsachse 26 des Filterelements 18 verlaufen mehrere Eintrittskanäle 28 im Wechsel mit Austrittskanälen 30. Die Eintrittskanäle 28 sind an der zweiten Stirnfläche 24 verschlossen. Die Verschlussstopfen sind in Figur 2 ohne Bezugszeichen dargestellt. Im Gegensatz dazu sind die Austrittskanäle 30 an der zweiten Stirnfläche 24 offen und im Bereich der ersten Stirnfläche 22 verschlossen. Wenn die Filterwände 34 nicht vom Abgas durchströmt werden müssen, kann auf die Verschlussstopfen verzichtet werden.

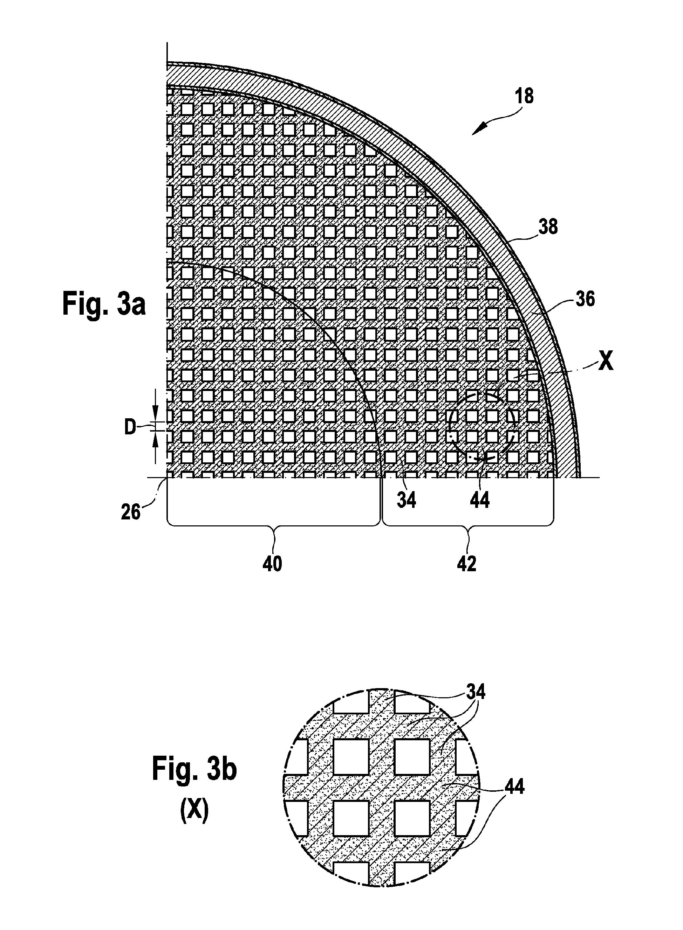

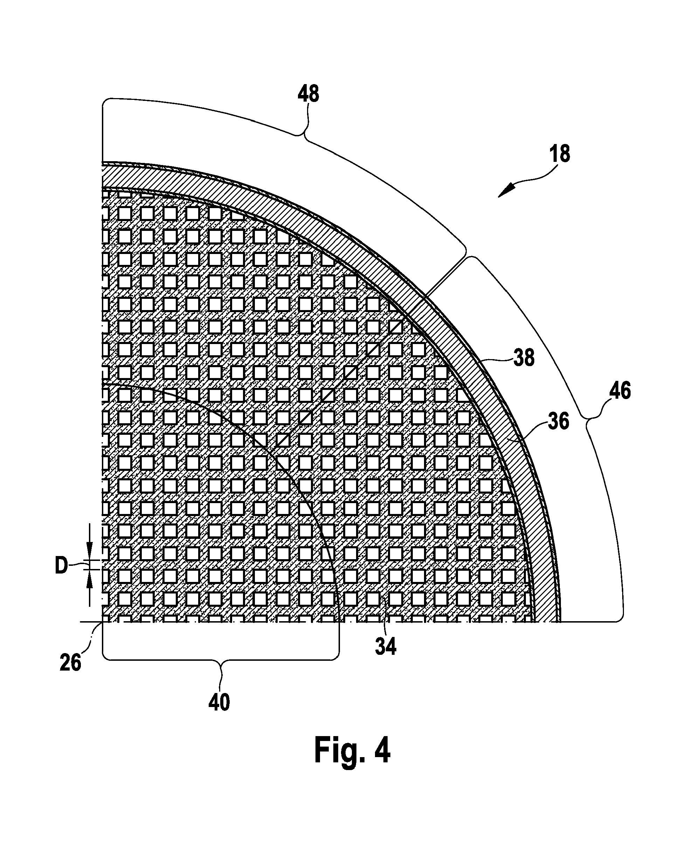

Der Strömungsweg des ungereinigten Abgases führt bei einem Filterelement in einen der Eintrittskanäle 28 und von dort durch eine Filterwand 34 in einen der Austrittskanäle 30. Exemplarisch ist dies durch die Pfeile 32 dargestellt. Beim Durchströmen durch die Filterwand 34 werden die in dem Abgas vorhandenen Rußpartikel herausgefiltert. Die Filterwände 34 sind mindestens bereichsweise mit einer oder mehreren katalytisch aktiven Beschichtungen beschichtet, deren Anordnung nachfolgend im Zusammenhang mit den Figuren 3 und 4 noch näher erläutert wird. Erfolgt keine Filterung des Abgases, können Eintrittskanäle 28 und Austrittskanäle 30 offen bleiben. Eine Dämmschicht hat das Bezugszeichen 36, während die Außenhülle der Filtereinrichtung 14 das Bezugszeichen 38 trägt.

In Figur 3a ist ein erstes Ausführungsbeispiel eines erfindungsgemäßen Filterelements 18 im Querschnitt dargestellt. Ausgehend von der Längsachse 26, die gleichzeitig den Mittelpunkt des Filterelements 18 bildet, ist das Filterelement 18 in ein inneres Segment 40 und ein äußeres Segment 42 unterteilt. Die Filterwände 34 des inneren Segments 40 können aus einem anderen Material bzw. einer anderen Materialzusammensetzung als die Filterwände 34 des äußeren Segments 42 bestehen. Dadurch ergeben sich hinsichtlich Porosität, spezifischer Wärmekapazität und/oder den Oberflächeneigenschaften der Filterwände 34 Unterscheide zwischen dem inneren Segment 40 und dem äußeren Segment 42. Diese unterschiedlichen Eigenschaften, wie beispielsweise eine vergrößerte Porosität der Filterwände 34 im inneren Segment 40, können dazu führen, dass die Rußbeladung im inneren Segment 40 geringer ausfällt als an den Filterwänden 34 im äußeren Segment 42. Im Ergebnis wird dadurch die Rußbeladung über den gesamten Querschnitt des Filterelements 18 vergleichmäßigt, was sich positiv auf die Temperaturverteilung bei der Regenerierung des Filterelements 18 auswirkt. Alternativ ist es auch möglich, im inneren Segment 40 die Materialzusammensetzung der Filterwände 34 so zu beeinflussen, dass deren spezifische Wärmekapazität größer als der Filterwände 34 im äußeren Segment 42 ist. Infolgedessen werden auch die Temperaturspitzen im inneren des Filterelements 18 bei der Regenerierung desselben reduziert und dadurch die inneren Spannungen ebenfalls teilweise abgebaut.

Alternativ ist es auch möglich, dass über die Oberflächeneigenschaften, insbesondere die Oberflächenmorphologie, der Filterwände 34 die Benetzbarkeit der Oberflächen für flüssig aufgebrachte Beschichtungen, insbesondere katalytisch aktive Beschichtungen, gezielt gesteuert wird. So kann es vorteilhaft sein, die katalytisch aktiven Beschichtungen in dem äußeren Segment 42 vermehrt aufzubringen, so dass dort vermehrt katalytisch induzierte Umsetzungsprozesse stattfinden. Diese Umsetzungsprozesse sind in der Regel exotherm, so dass aufgrund dieser bereichsweise erhöhten katalytischen Aktivität im äußeren Segment 42 dort die Temperatur angehoben wird. Auch dies führt zu einer Vergleichmäßigung des Temperaturprofils, insbesondere während der Regenerierung.

Über die Oberflächeneigenschaften kann aber auch die Filterwirkung der Filterwände 34 gezielt beeinflusst werden und infolgedessen die Vergleichmäßigung der Beladung des Filterelements 18 während des Normalbetriebs erreicht werden.

Bei einer weiteren vorteilhaften Ausgestaltung der Erfindung sind an den Knoten 44)siehe Fig. 3b), die zwischen den Filterwänden 34 beim Extrudieren entstehen, andere Materialzusammensetzungen und/oder Strukturen ausgebildet, so dass hier "lokal" eine Segmentierung zwischen den Knoten 44 und den Filterwänden 34 erfolgt. Dadurch können die inneren Spannungen bei der Regenerierung des Filterelements 18 weiter reduziert werden. Die Segmentierung des Filterelements 18 und die unterschiedliche Materialzusammensetzung der Knoten 44 und der Filterwände 34 können alternativ oder kumulativ eingesetzt werden.

In Figur 4 ist ein weiteren Ausführungsbeispiel eines erfindungsgemäßen Filterelements 18 ebenfalls im Teilquerschnitt dargestellt. Dabei wird das Filterelement 18 in drei Segmente, nämlich ein inneres Segment 40, sowie in Umfangsrichtung aneinander anschließende Segmente 46 und 48 vorgenommen. Die in Umfangsrichtung benachbart zueinander angeordneten Segmente 46 und 48 unterscheiden sich hinsichtlich Materialzusammensetzung und/oder Struktur voneinander. Ein wichtiger Strukturparameter ist eine Dicke D der Filterwände 34. Durch die erfindungsgemäße Segmentierung können ungleiche Betriebsbedingungen in Umfangsrichtung, wie beispielsweise eine erhöhte Betriebstemperatur in dem in Einbaulage oberen Teil des Filterelements 18 verglichen mit einer in Einbaulage unteren Seite des Filterelements 18, Rechnung getragen werden. Auch hier erfolgt die Herstellung durch Co-Extrusion unterschiedlicher Materialzusammensetzungen.

Für alle Ausführungsbeispiele gilt, dass die Übergänge zwischen den Segmenten 40, 42, 46 und/oder 48, entweder abrupt, gestuft oder fließend erfolgen können. Selbstverständlich ist ein fließender Übergang grundsätzlich wünschenswert, da sich durch den fließenden Übergang der Eigenschaften der Filterwände 34 auch fließende Unstetigkeiten bzw. Sprünge im Temperaturgradient bzw. in der Spannungsverteilung vermeiden lassen.

## Patentansprüche

1. Filterelement, insbesondere zur Reinigung von Abgasen einer Brennkraftmaschine (10), mit einer parallel zur Hauptströmungsrichtung des Abgases verlaufenden Längsachse (26), mit einer Vielzahl von Kanälen (28, 30) wobei die Kanäle (28, 30) durch Filterwände (34) begrenzt werden, und wobei das Filterelement (1) durch Extrudieren aus einer Suspension hergestellt wird, **dadurch gekennzeichnet, dass** Materialzusammensetzung und/oder Struktur, insbesondere die Porosität und/oder die Oberflächeneigenschaften, der Filterwände (34) in radialer Richtung (40, 42) und/oder in Umfangsrichtung (46, 48) Unterschiede aufweisen.

2. Filterelement nach Anspruch 1, **dadurch gekennzeichnet, dass** das Filterelement (18) radial und/oder in Umfangsrichtung in verschiedene Segmente (40, 42, 46, 48) unterteilt ist, und dass sich die Materialzusammensetzung und/oder Struktur der Filterwände (34) benachbart angeordneter Segmente (40, 42 und 46, 48) voneinander unterscheidet.

3. Filterelement nach Anspruch 2, **dadurch gekennzeichnet, dass** in axialer und/oder in radialer Richtung mindestens zwei verschiedene Segmente (40, 42, 46, 48) vorhanden sind.

4. Filterelement nach Anspruch 2 oder 3, **dadurch gekennzeichnet, dass** ein fließender Übergang, ein gestufter Übergang oder ein abrupter Übergang der Materialzusammensetzung und/oder Struktur zwischen benachbart angeordneten Segmenten (40, 42 und 46, 48).

5. Filterelement nach einem der vorhergehenden Ansprüche, **dadurch gekennzeichnet, dass** Materialzusammensetzung und/oder Struktur in Knoten (44) des Filterelements (18) Unterschiede zu den anschließenden der Filterwänden (34) aufweisen.

6. Filterelement nach einem der vorhergehenden Ansprüche, **dadurch gekennzeichnet, dass** das Filterelement (18) aus Cordierit, Siliziumcarbid, Aluminiumtitanat oder Mullit und Zuschlagsstoffen besteht.

7. Abgasnachbehandlungseinrichtung mit einem Filterelement (18), mit einem Gehäuse (16) und mit einem Abgasrohr (12), **dadurch gekennzeichnet, dass** das Filterelement ein Filterelement (18) nach einem der vorhergehenden Ansprüche ist.

8. Verfahren zur Herstellung eines Filterelements, insbesondere eines Filterelements zur Reinigung von Abgasen einer Brennkraftmaschine (10), mit einer parallel zur Hauptströmungsrichtung des Abgases verlaufenden Längsachse (26), mit einer Vielzahl von Kanälen (28, 30), wobei die Kanäle (28, 30) durch Filterwände (34) begrenzt werden, wobei das Filterelement (1) aus einer Suspension extrudiert wird, **dadurch gekennzeichnet, dass** Materialzusammensetzung und/oder Struktur, insbesondere die Porosität und/oder die Oberflächeneigenschaften, der Filterwände (34) in radialer Richtung (40, 42) und/oder in Umfangsrichtung (46, 48) unterschiedlich ausgebildet werden.
